# EUROPÄISCHE PATENTSCHRIFT

(11) **EP 4 068 009 B1**
(45) Veröffentlichungstag und Bekanntmachung des Hinweises auf die Patenterteilung: **27.08.2025**
(21) Anmeldenummer: 22166045.9
(22) Anmeldetag: 31.03.2022
(51) Int. Cl.: G03H 1/04, G03H 1/00, G07D 7/00, G03H 1/22, G03H 1/20

(54) **VERFAHREN UND VORRICHTUNG ZUM HERSTELLEN EINES HOLOGRAMMS FÜR EIN SICHERHEITSELEMENT SOWIE VERFAHREN ZUM HERSTELLEN EINES WERT- ODER SICHERHEITSDOKUMENTS**
METHOD AND DEVICE FOR PRODUCING A HOLOGRAM FOR A SECURITY ELEMENT AND METHOD FOR PRODUCING A VALUE OR SECURITY DOCUMENT
PROCÉDÉ ET DISPOSITIF DE PRODUCTION D'UN HOLOGRAMME POUR UN ÉLÉMENT DE SÉCURITÉ, AINSI QUE PROCÉDÉ DE PRODUCTION D'UN DOCUMENT DE VALEUR OU DE SÉCURITÉ

(30) Priorität: 01.04.2021 DE 102021108433
(43) Veröffentlichungstag der Anmeldung: 05.10.2022
(73) Patentinhaber: Bundesdruckerei GmbH, 10969 Berlin (DE)
(72) Erfinder: Bielesch, Ulrich, 56132 Frücht (DE); Rötzer, Martin, 85229 Markt Indersdorf (DE); Langgaßner, Michael, 81245 München (DE); Mauderer, Michael, 81825 München (DE); Frank, Alexander, 81243 München (DE); Karvounis, Gerasimos, 80993 München (DE); Richter, Werner, 80999 München (DE)
(74) Vertreter: Bittner, Thomas L.

(56) Entgegenhaltungen:
- EP-B1- 2 738 624
- DE-A1- 102008 052 568
- DE-A1- 102009 021 101
- DE-A1- 102012 216 219
- US-A- 5 528 390
- US-A1- 2007 091 395

## Beschreibung

Die Erfindung betrifft ein Verfahren und eine Vorrichtung zum Herstellen eines Hologramms für ein Sicherheitselement sowie ein Verfahren zum Herstellen eines Wert- oder Sicherheitsdokuments.

### Hintergrund

Sicherheitselemente dienen dazu, Sicherheits- oder Wertdokumente gegen Fälschen oder Kopieren zu sichern. Eine Art von Sicherheitselementen stellen Hologramme dar. In Sicherheitselementen sind oftmals auch individualisierende Angaben, beispielsweise Seriennummer, Ausweisnummer, biometrische Daten, Bilder (Passbilder), etc., enthalten. Diese können in Klarschrift oder Bildform oder optisch codiert oder maschinenlesbar vorgesehen sein.

Das grundsätzliche Vorgehen bei dem Herstellung von Hologrammen ist beispielsweise im Dokument EP 0 896 260 A2 beschrieben. Die Grundzüge werden folgend kurz erläutert. Zunächst wird ein holografischer Master mit einem Masterhologramm hergestellt. Dann wird der holografische Master hinter einem holografischen Aufzeichnungsmaterial positioniert. Kohärentes Licht, beispielsweise Laserlicht, wird auf die dem holografischen Master abgewandte Seite des holografischen Aufzeichnungsmaterials eingestrahlt, typischerweise mit definierter Wellenlänge und definiertem Inzidenzwinkel, nach Maßgabe des vom holografischen Master zu rekonstruierenden holografischen Musters. Es durchdringt das holografische Aufzeichnungsmaterial und wird vom Master gebeugt und / oder reflektiert, womit das Hologramm durch Interferenz mit dem einfallenden Licht erzeugt wird und sich das Hologramm in dem holografischen Aufzeichnungsmaterial abbildet und durch photochemische- oder photophysikalische Prozesse im holografischen Aufzeichnungsmaterial speichert. Hierbei kann der holografische Master so ausgelegt sein, dass er für mehrere Wellenlängen empfindlich ist und diese entsprechend beugt. Auch andere als die beschriebene Anordnung können verwendet werden, um Hologramme herzustellen. Auch im Dokument EP 0 375 185 A2 ist das Einschreiben von Hologrammen in ein holografisches Aufzeichnungsmaterial beschrieben.

Zum Beispiel sind Volumenhologramme bekannt. Dies ist ein Hologramm, bei welchem sich die durch Interferenz gebildeten und abgebildeten Strukturen von einer Oberfläche des Hologramms oder holografischen Aufzeichnungsmaterials in dieses hinein erstrecken. Diese Strukturen können als mehrere Bragg-Ebenen in dem Material betrachtet werden. Ein Volumenhologramm weist daher eine hohe Wellenlängenselektivität auf, kann also nur mit der spektralen Farbe rekonstruiert werden, mit der es belichtet wurde.

Um Hologramme zu individualisieren, kann das kohärente Licht mittels eines sogenannten Spatial Light Modulators moduliert werden. Hierdurch wird dem Hologramm ein Individualisierungsmuster aufgeprägt. Aus der Praxis sind digitale Projektoren bekannt, welche mit Spatial Light Modulatoren in Form von Liquid Crystal Displays (LCD) arbeiten. Die Funktionsweise entspricht beispielsweise der Projektion eines Dias, wobei der Spatial Light Modulator anstelle des Dias tritt. Des Weiteren sind digitale Projektoren bekannt, welche ein DMD (Digital Micro Mirror Device) als Spatial Light Modulator umfassen. Aus der Literaturstelle DE 2005 054 396 A1 ist der Einsatz eines Spatial Light Modulators in Form eines Digital Micro Mirror Device (DMD) zur Markierung von Gegenständen bekannt.

Im Dokument WO 2007 / 014317 A2 sind ein Verfahren und eine Vorrichtung zur Massenproduktion von Reflexionshologrammen offenbart. Dort ist vorgesehen, einen Master zu kopieren, welcher beispielsweise ein Zählwerk umfasst, um die nacheinander sequentiell hergestellten Hologramme individuell nummerieren zu können. Ist der Master farbig, so kann dieser über eine Einstrahlung von mehrfarbigem Laserlicht auch farbig kopiert werden. Hierbei werden die unterschiedlichen Farbinformationen in demselben Speicherbereich des Hologramms abgelegt.

Aus der JP-06-118863 A ist ein Verfahren zum Herstellen eines farbigen Lipmann-Hologramms bekannt.

Dokument WO 2017 / 109 119 A1 offenbart ein Verfahren zum Integrieren eines Hologramms in einen Sicherheitsdokumentenkörper, welcher einen Laminationskörper umfasst, wobei bei dem Verfahren die folgenden Schritte vorgesehen sind: Bereitstellen eines Hologrammfilms mit einer Trägersubstratschicht und einer Fotoschicht und Bereitstellen weiterer Substratschichten, Ausführen einer Lamination zum Ausbilden des Laminationskörpers, wobei der Hologrammfilm gemeinsam mit den weiteren Substratschichten zu einem Substratschichtenstapel zusammengetragen wird und gemeinsam mit den weiteren Substratschichten in einem Laminationsverfahren zu dem Laminationskörper zusammengefügt wird.

Im Dokument DE 10 2007 042 386 A1 ist ein Verfahren zum Herstellen farbiger individualisierter Hologramme offenbart, die als Sicherheitselemente für Sicherheits- und / oder Wertdokumente verwendbar sind. Bei dem Verfahren ist vorgesehen, dass Licht mehrerer unterschiedlicher Farben erzeugt wird, das Licht farbgetrennt individuell räumlich moduliert wird, das modulierte Licht optisch so geführt wird, dass das Licht an einem holografischen Master zumindest teilweise gebeugt und / oder reflektiert wird und in dem einem holografischen Aufzeichnungsmaterial so mit dem modulierten nicht gebeugten und / oder reflektierten Licht überlagert wird und das mehrfarbige individualisierte Hologramm aufgenommen wird, wobei das Licht mittels mehrerer Spatial Light Modulatoren farbgetrennt zeitgleich moduliert wird. Jeder der mehreren Farben ist ein eigener Spatial Light Modulator zugeordnet, und die mehreren einfarbigen modulierten Lichtstrahlen (6"-8") der mehreren Farben werden vor dem Beugen und / oder Reflektieren an dem holografischen Master und dem Überlagern in dem holografischen Aufzeichnungsmaterial zu einem mehrfarbigen farbgetrennt individuell modulierten Belichtungslichtstrahl kollinear zusammengeführt, so dass jedem der Pixel des individualisierten Hologramms genau eine der mehreren Farben zugeordnet ist.

Das Dokument DE 10 2012 216219 A1 beschreibt einen Master für die Herstellung eines in einem individualisierbaren Bereich individualisierten Volumenreflexionshologramm umfassend einen Träger, mindestens eine Beugungsstruktur, welche auf dem Träger angeordnet ist oder in diesem ausgebildet ist und einen individualisierbaren Bereich bedeckt, wobei die mindestens eine Beugungsstruktur kohärentes Licht einer Wellenlänge, das aus einer vorgegebenen Einfallsrichtung auf die Beugungsstruktur auftrifft in eine vorgegebene Ausfallrichtung zurückstrahlt, wobei der Master ein Reflexionselement umfasst, das gerichtetes Licht gemäß der geometrischen Optik spiegelnd reflektiert.

In dem Dokument US 2010 / 003 606 A1 ist ein Verfahren zum Verarbeiten eines Hologramms offenbart. Gemäß dem Verfahren wird ein holografisches Bild in einer auf einem Substrat getragenen Photopolymerschicht gebildet. Ein Farbabstimmungsfilm wird auf die gegenüberliegende Photopolymerschicht aufgebracht, um ein Laminat zu bilden. Die Temperatur des Laminats wird erhöht und anschließend gekühlt und dann einer Quelle elektromagnetischer Strahlung zum Aushärten ausgesetzt.

Aus dem Dokument US 2012 / 302 659 A1 ist eine Photopolymerformulierung enthaltend Matrixpolymere, Schreibmonomere und Photoinitiatoren sowie deren Verwendung zur Herstellung von holografischen Medien bekannt.

Weitere Verfahren und Vorrichtungen sind aus der DE 10 2012 216219 A1, der US 5 528 390 A, der EP 2,738,624 B1 und der US 2007/091395 A1 bekannt.

### Zusammenfassung

Aufgabe der Erfindung ist es, ein Verfahren und eine Vorrichtung zum Herstellen eines Hologramms für ein Sicherheitselement sowie ein Verfahren zum Herstellen eines Wert- oder Sicherheitsdokuments anzugeben, mit denen ein Hologramm aufweisendes Sicherheitselement zuverlässig herstellbar ist, insbesondere auch im Rahmen einer Massenfertigung.

Zur Lösung sind ein Verfahren und eine Vorrichtung zum Herstellen eines Hologramms für ein Sicherheitselement nach den unabhängigen Ansprüche 1 und 12 geschaffen. Weiterhin ist ein Verfahren zum Herstellen eines Wert- oder Sicherheitsdokuments nach dem nebengeordneten Anspruch 11 geschaffen. Ausgestaltungen sind Gegenstand von abhängigen Unteransprüchen.

Nach einem Aspekt ist ein Verfahren zum Herstellen eines Hologramms für ein Sicherheitselement geschaffen, welches Folgendes aufweist: Bereitstellen eines holografischen Aufzeichnungsmaterial in einer Vorrichtung mit Bearbeitungsstationen, die eingerichtet sind, aufeinanderfolgende Prozessschritte einer Prozessschrittkette beim Herstellen eines Hologramms für ein Sicherheitselement auszuführen und hierbei das holografische Aufzeichnungsmaterial Prozessparametern entsprechend zu prozessieren; Bearbeiten des holografischen Aufzeichnungsmaterials in einem Prozessschritt, der eingerichtet ist, das holografische Aufzeichnungsmaterial zu belichten, wobei hierbei das holografische Aufzeichnungsmaterial dem Prozessschritt zugeordneten Prozessparametern entsprechend bearbeitet wird und das Bearbeiten ein Einschreiben einer holografischen Anordnung mit dem Hologramm für das Sicherheitselement mittels Belichten des holografischen Aufzeichnungsmaterials in das holografische Aufzeichnungsmaterial umfasst, wobei das Hologramm in dem holografischen Aufzeichnungsmaterial eine Hologrammnutzfläche erfassend gebildet wird, wobei die holografische Anordnung beim Belichten des holografischen Aufzeichnungsmaterials mit einem Prüfelement hergestellt wird; Bestimmen einer optischen Beugungseffizienz der holografischen Anordnung mittels einer Messeinrichtung in einem weiteren Prozessschritt, welcher in der Prozessschrittkette in der Vorrichtung mit den Bearbeitungsstationen dem Prozessschritt nachgelagert ist, wobei die optische Beugungseffizienz für das Prüfelement bestimmt wird; Ändern wenigstens eines Prozessparameters, wenn die gemessene optischen Beugungseffizienz von einer vorgegebenen optischen Beugungseffizienz verschieden ist, wobei der Prozessparameter ein Laserparameter für den Betrieb eines Lasers zum Einschreiben der holografischen Anordnung und / oder eine Höhe einer Temperierungstemperatur und/oder eine Dauer einer Temperierung des holografischen Aufzeichnungsmaterials und der darin eingeschriebenen holografischen Anordnung umfasst; und Anwenden des wenigstens einen geänderten Prozessparameters beim weiteren Prozessieren der holografischen Anordnung in einem anderen Prozessschritt, welcher in der Prozessschrittkette in der Vorrichtung mit den Bearbeitungsstationen dem weiteren Prozessschritt nachgelagert ist, und / oder für das Herstellen eines weiteren Hologramms für ein Sicherheitselement in der Vorrichtung mit den Bearbeitungsstationen, wobei die optische Beugungseffizienz entlang der Prozessschrittkette in der Vorrichtung mit den Bearbeitungsstationen mittels einer von der Messvorrichtung umfassten zweiten Messeinrichtung gemessen wird, nachdem das holografische Aufzeichnungsmaterial zumindest im Bereich der von dem Hologramm für das Sicherheitselement erfassten Hologrammnutzfläche mittels weiterer Lichtanwendung stabilisiert wurde.

Nach einem weiteren Aspekt ist eine Vorrichtung zum Herstellen eines Hologramms für ein Sicherheitselement geschaffen, die Folgendes aufweist: Bearbeitungsstationen, die eingerichtet sind, aufeinanderfolgende Prozessschritte einer Prozessschrittkette beim Herstellen eines Hologramms für ein Sicherheitselement auszuführen und hierbei das holografische Aufzeichnungsmaterial Prozessparametern entsprechend zu prozessieren; und eine Messeinrichtung, die eingerichtet ist, eine optische Beugungseffizienz einer holografischen Struktur zu bestimmen. Die Vorrichtung ist für Folgendes eingerichtet: ein holografisches Aufzeichnungsmaterial bereitzustellen; das holografische Aufzeichnungsmaterial in einem Prozessschritt zu bearbeiten, derart, dass das holografische Aufzeichnungsmaterial belichtet wird, wobei hierbei das holografische Aufzeichnungsmaterial dem Prozessschritt zugeordneten Prozessparametern entsprechend bearbeitet wird und das Bearbeiten ein Einschreiben einer holografischen Anordnung mit dem Hologramm für das Sicherheitselement mittels Belichten des holografischen Aufzeichnungsmaterials in das holografische Aufzeichnungsmaterial umfasst, wobei das Hologramm in dem holografischen Aufzeichnungsmaterial eine Hologrammnutzfläche erfassend gebildet wird, wobei die Vorrichtung dazu eingerichtet ist, die holografische Anordnung beim Belichten des holografischen Aufzeichnungsmaterials (2) mit einem Prüfelement herzustellen; mittels der Messeinrichtung die optische Beugungseffizienz für die holografische Anordnung in einem weiteren Prozessschritt zu bestimmen, welcher in der Prozessschrittkette in der Vorrichtung mit den Bearbeitungsstationen dem Prozessschritt nachgelagert ist und die optische Beugungseffizienz für das Prüfelement zu bestimmen; wenigstens einen Prozessparameter zu ändern, wenn die gemessene optischen Beugungseffizienz von einer vorgegebenen optischen Beugungseffizienz verschieden ist, wobei der Prozessparameter ein Laserparameter für den Betrieb eines Lasers zum Einschreiben der holografischen Anordnung und / oder eine Höhe einer Temperierungstemperatur und/oder eine Dauer einer Temperierung des holografischen Aufzeichnungsmaterials und der darin eingeschriebenen holografischen Anordnung umfasst; und den wenigstens einen geänderten Prozessparameter beim weiteren Prozessieren der holografischen Anordnung in einem anderen Prozessschritt, welcher in der Prozessschrittkette in der Vorrichtung mit den Bearbeitungsstationen dem weiteren Prozessschritt nachgelagert ist, und / oder beim Herstellen eines weiteren Hologramms für ein Sicherheitselement mittels der Bearbeitungsstationen anzuwenden, wobei die Vorrichtung weiter dazu eingerichtet ist, die optische Beugungseffizienz entlang der Prozessschrittkette in der Vorrichtung mit den Bearbeitungsstationen mittels einer von der Messvorrichtung (15) umfassten zweiten Messeinrichtung (15b) zu messen, nachdem das holografische Aufzeichnungsmaterial (2) zumindest im Bereich der von dem Hologramm für das Sicherheitselement erfassten Hologrammnutzfläche mittels weiterer Lichtanwendung stabilisiert wurde.

Nach einem anderen Aspekt ist ein Verfahren zum Herstellen eines Wert- oder Sicherheitsdokuments geschaffen, wobei ein Dokumentenkörper des Wert- oder Sicherheitsdokuments mit einem ein Hologramm aufweisenden Sicherheitselement gebildet wird, welches nach dem vorangehend angegebenen Verfahren hergestellt ist.

Es ist vorgesehen, beim Herstellen des Hologramms für das Sicherheitselement, welches dann insbesondere in einem Wert- und / oder Sicherheitsdokument eingebracht werden kann, die Ausbildung oder Herstellung des Hologramms in dem holografischen Aufzeichnungsmaterial in Abhängigkeit von einer Bestimmung der optischen Beugungseffizienz für eine hergestellte holografische Anordnung mit dem Hologramm zu kontrollieren oder zu steuern. Die so bestimmte Beugungseffizienz dient als Maß für die Beugungseffizienz des Hologramms, um dessen den jeweiligen Anforderungen entsprechende Ausbildung zu kontrollieren.

Wird festgestellt, dass die bestimmte Beugungseffizienz von einer vorgegebenen optischen Beugungseffizienz, sei es einem Wert oder einem Bereich für die Beugungseffizienz, abweicht, wird in Abhängigkeit hiervon zumindest einer der Prozessparameter geändert, die bei den aufeinanderfolgenden Prozessschritten der Prozessschrittkette in der Vorrichtung mit den Bearbeitungsstationen zum Herstellen holografischer Anordnungen mit Hologramm angewendet werden. Der mindestens eine geänderte Prozessparameter kann dann bei der weiteren Bearbeitung oder Prozessierung des holografischen Aufzeichnungsmaterials mit der gerade hergestellten holografischen Anordnung mit dem Hologramm angewendet werden. Alternativ oder ergänzend kann vorgesehen sein, den geänderten Prozessparameter beim Herstellen eines nachfolgenden oder weiteren Hologramms für ein Sicherheitselement in der Vorrichtung mit den Bearbeitungsstationen anzuwenden, zum Beispiel einem direkt nachfolgend herzustellenden Hologramm.

Hierdurch kann eine Prozessoptimierung auf Basis des geänderten Prozessparameters noch während der weiteren Prozessierung des im holografischen Aufzeichnungsmaterial hergestellten Hologramms angewendet werden, aber nicht nur hierfür, sondern alternativ oder ergänzend beim Herstellen einer folgenden holografischen Anordnung mit einem weiteren Hologramm, also zum Beispiel in Verbindung mit dem Herstellen eines Sicherheitselements, wobei diese Herstellung auf das Herstellen eines vorangehenden Sicherheitselements mit Hologramm stattfindet. Insgesamt kann das Hologramm für das Sicherheitselement so in dem holografischen Aufzeichnungsmaterial mit höherer Zuverlässigkeit den jeweiligen Vorgaben des Herstellungsprozesses entsprechend hergestellt werden. Noch während der Prozessierung des holografischen Aufzeichnungsmaterials mit der hierin eingebrachten holografischen Anordnung in der Vorrichtung mit den Bearbeitungsstationen wird die Beugungseffizienz gemessen, um hierauf basieren dann ggf. einen oder mehrere Prozessparameter anzupassen.

Insbesondere umfasst ein Prozessparameter einen einstellbaren Wert einer physikalischen Größe an Maschinen und Anlagen zur Steuerung eines gegebenen Prozesses, im vorliegenden Fall also für die Steuerung des Verfahrens zum Herstellen eines Hologramms für ein Sicherheitselement im Rahmen der Prozessschritte. Beispielsweise kann es sich bei den Prozessparametern um Laserparameter für den Betrieb eines Lasers zum Einschreiben einer holografischen Anordnung oder Struktur handeln. Alternativ oder zusätzlich können Prozessparameter andere Vorrichtungen in dem Verfahren betreffen. Zum Beispiel kann ein Prozessparameter eine Zeitdauer (zum Beispiel Belichtungszeit), eine Lichtintensität, und/oder eine Temperatur sein.

Die optische Beugungseffizienz ist eine charakteristische Größe diffraktiver optischer Elemente, insbesondere optischer Gitter. Sie ist definiert als das Verhältnis der Lichtintensität, die von einem diffraktiven optischen Element in einen bestimmten Raumwinkel gebeugt wird, zu der auf das diffraktive optische Element einfallenden Lichtintensität. Sie kann somit als Maß für die Qualität oder Güte holografischer Strukturen herangezogen werden. Die Beugungseffizienz wird prozentual gemessen. Es kann vorgesehen sein, einen nicht zu unterschreitenden Grenzwert festzulegen, zum Beispiel etwa 30 %.

Das Bestimmen der optischen Beugungseffizienz für die holografische Anordnung, welche das Hologramm für das Sicherheitselement umfasst, kann in unmittelbarem Anschluss an das Einschreiben der holografischen Anordnung in dem holografischen Aufzeichnungsmaterial oder nach dem Durchführen eines oder mehrerer weiterer Prozessschritte hiernach ausgeführt werden.

Mittels der Vorrichtung können an dem holografischen Aufzeichnungsmaterial holografische Anordnungen mit einem jeweiligen Hologramm im Rahmen eines kontinuierlichen Herstellungsprozesses erzeugt werden. Das holografische Aufzeichnungsmaterial kann in einer Ausführung als Endlosmaterial von der Rolle bereitgestellt und in den Herstellungsprozess eingeführt werden.

Das Bestimmen der Beugungseffizient kann an dem Endlosmaterial ausgeführt werden. Alternativ oder ergänzend kann die Bestimmung der Beugungseffizienz an einem vom Endlosmaterial abgetrennten Abschnitt mit der eingeschriebene oder einbelichteten holografischen Anordnung ausgeführt werden.

Die optische Beugungseffizienz kann im Bereich der von dem Hologramm für das Sicherheits-element erfassten Hologrammnutzfläche bestimmt werden. Bei dieser Ausführungsform wird die Beugungseffizienz im Bereich der vom Hologramm erfassten Hologrammnutzfläche in dem holografischen Aufzeichnungsmaterial selbst bestimmt, also im Bereich des Hologramms. Die Beugungseffizienz wird für einen Teilbereich bestimmt, welcher innerhalb der Hologrammnutzfläche liegt, über welche sich das Hologramm in dem holografischen Aufzeichnungsmaterial flächig erstreckt.

Die optische Beugungseffizienz kann außerhalb des Bereichs der von dem Hologramm für das Sicherheitselement erfassten Hologrammnutzfläche bestimmt werden. Bei dieser Ausgestaltung wird die optische Beugungseffizienz außerhalb der Hologrammnutzfläche, über die sich das Hologramm erstreckt, in einem Bereich gemessen, in welchem beim Einbringen der holografischen Anordnung als Teil hiervon eine holografische Struktur eingebracht wurde, die das Messen der optischen Beugungseffizienz ermöglicht. Somit wird außerhalb des Hologramms für das Sicherheitselement selbst die optische Beugungseffizienz bestimmt, die aufgrund des gleichzeitigen Einbringens mit dem Hologramm für das Sicherheitselement selbst ein Maß für die Beugungseffizienz des Hologramms für das Sicherheitselement anzeigt.

Die holografische Anordnung wird beim Belichten des holografischen Aufzeichnungsmaterials mit einem Prüfelement hergestellt, und die optische Beugungseffizienz wird für das Prüfelement bestimmt. In Ergänzung und zusätzlich zum Hologramm für das Sicherheitselement wird beim Einbringen der holografischen Anordnung ein (holografisches) Prüf- oder Testelement hergestellt, welches dann beim Bestimmen der Beugungseffizienz ausgewertet werden kann. Die aus der Bestimmung der Beugungseffizienz abgeleitete Prozesskontrolle basiert dann auf der Messung an dem Prüfelement und bildet ein Maß für die Beugungseffizienz des Hologramms. Prüfelement und Hologramm sind beide als Teil der holografischen Anordnung beim Einschreiben dieser ins holografische Aufzeichnungsmaterial hergestellt worden. Das Prüfelement kann zwischen aufeinanderfolgenden Hologrammnutzflächen angeordnet sein, wenn die holografischen Anordnungen an einem als Endlosmaterial bereitgestellten holografischen Aufzeichnungsmaterial ausgebildet werden.

Das Prüfelement kann zumindest teilweise im Bereich der von dem Hologramm für das Sicherheitselement erfassten Hologrammnutzfläche hergestellt werden. Das Prüfelement kann ganz oder teilweise im Bereich der Hologrammnutzfläche liegen, über die sich das Hologramm für das Sicherheitselement in dem holografischen Aufzeichnungsmaterial flächig erstreckt. Auf diese Weise kann das Prüfelement in einen Teilabschnitt des Hologramms integriert sein, zweckmäßig ohne die holografische Struktur des Hologramms zu beeinträchtigen. Hier kann das Prüfelement von einem Element oder Abschnitt des Hologramms gebildet werden, welches für mehrere Hologramme unverändert bleibt, beispielsweise ein Hologrammelement, welches nicht personenspezifisch ist, im Unterschied zu Hologrammelementen, die personenspezifisch ausgebildet sind.

Das Prüfelement kann zumindest teilweise außerhalb des Bereichs der von dem Hologramm für das Sicherheitselement erfassten Hologrammnutzfläche hergestellt werden. Bei dieser Ausführungsform ist das Prüfelement teilweise oder ganz außerhalb der Hologrammnutzfläche angeordnet, über die sich das Hologramm flächig in dem holografischen Aufzeichnungsmaterial erstreckt. Dieses ermöglicht es, den Bereich des Prüfelements und die Hologrammnutzfläche nach dem Einschreiben der holografischen Anordnung im Verlauf der weiteren Prozessschritte wahlweise unabhängig voneinander zu prozessieren, beispielsweise unterschiedliche Bearbeitungsschritte oder gleiche Bearbeitungsschritte in unterschiedlicher Art und Weise anzuwenden. Beispielsweise können der Bereich des Prüfelements einerseits und die Hologrammnutzfläche andererseits unterschiedlich belichtet und / oder temperiert werden.

Die optische Beugungseffizienz kann entlang der Prozessschrittkette in der Vorrichtung mit den Bearbeitungsstationen mittels einer von der Messvorrichtung umfassten ersten Messeinrichtung gemessen werden, nachdem die holografische Anordnung in das holografische Aufzeichnungsmaterial eingeschrieben wurde. Das Bestimmen der optischen Beugungseffizienz kann hierbei unmittelbar nach dem Einschreiben der holografischen Anordnung ausgeführt werden, insbesondere vor nachfolgenden Prozess- oder Bearbeitungsschritten, beispielsweise einer materialbearbeitenden Belichtung und / oder einer Temperierung des holografischen Aufzeichnungsmaterials mit der eingeschriebenen holografischen Anordnung oder Struktur.

Entsprechend der beanspruchten Erfindung wird die optische Beugungseffizien entlang der Prozessschrittkette in der Vorrichtung mit den Bearbeitungsstationen jedoch zumindest mittels einer von der Messvorrichtung umfassten zweiten Messeinrichtung gemessen, nachdem das holografische Aufzeichnungsmaterial zumindest im Bereich der von dem Hologramm für das Sicherheitselement erfassten Hologrammnutzfläche mittels weiterer Lichtanwendung stabilisiert wurde. Die optische Beugungseffizienz kann hierbei unmittelbar im Anschluss an die weitere Lichtanwendung oder nach einem oder mehreren hierauf folgenden Prozessschritten bestimmt werden. Die weitere Lichtanwendung kann das Bestrahlen mit UV-Licht umfassen. Mittels der weiteren Lichtanwendung können in dem holografischen Aufzeichnungsmaterial chemische Prozesse oder Reaktionen initiiert werden, die zur Stabilisierung des Materials dienen, ohne dieses schon (vollständig) auszuhärten. Derartige Prozessschritte sind als solche in verschiedenen Ausführungsformen bekannt.

Die optische Beugungseffizienz kann entlang der Prozessschrittkette in der Vorrichtung mit den Bearbeitungsstationen zusätzlich mittels einer von der Messvorrichtung umfassten dritten Messeinrichtung gemessen werden, nachdem das holografische Aufzeichnungsmaterial zumindest im Bereich der von dem Hologramm für das Sicherheitselement erfassten Hologrammnutzfläche ausgehärtet wurde. Das Aushärten kann ein Anwenden von Wärmeenergie (Temperieren) umfassen. Ist ein Prüfelement außerhalb der Hologrammnutzfläche vorgesehen, kann dieser Bereich des holografischen Aufzeichnungsmaterials gleich oder verschieden zu dem Bearbeiten der Hologrammnutzfläche prozessiert werden.

Die optische Beugungseffizienz kann in einem von dem Prüfelement erfassten Bereich des holografischen Aufzeichnungsmaterials außerhalb der Hologrammnutzfläche gemessen werden, wobei der vom Prüfelement erfasste Bereich zum Zeitpunkt des Messens der Beugungseffizienz frei vom Bearbeiten mittels der weiteren Lichtanwendung zum Stabilisieren und / oder zum Aushärten ist. Bei diesem Beispiel wird die Hologrammnutzfläche mit dem Hologramm nach dem Einschreiben der holografischen Anordnung oder Struktur weiter prozessiert, insbesondere mittels der weiteren Lichtanwendung und / oder Temperieren. Das getrennt von der Hologrammnutzfläche gebildete Prüfelement wird diesen Prozessschritten nicht unterzogen, so dass das Ergebnis der Bestimmung der Beugungseffizienz für das Prüfelement nicht durch Auswirkungen dieser Prozessschritte beeinflusst wird. Die Beugungseffizienz kann so für das Prüfelement in einem Zustand nach dem Einschreiben gemessen werden, obwohl die Hologrammnutzfläche schon weiter bearbeitet wurde. Hierbei kann vorgesehen sein, dass das holografische Aufzeichnungsmaterial im Bereich des Prüfelements, welches beim Einschreiben der holografischen Anordnung oder Struktur erzeugt wurde, im Wesentlichen im Materialzustand zum Zeitpunkt des Einschreibens verbleibt.

Vor dem Bearbeiten des holografischen Aufzeichnungsmaterials zum Einschreiben der holografischen Anordnung kann das holografische Aufzeichnungsmaterial mittels einer weiteren Messeinrichtung hinsichtlich wenigstens einer Materialeigenschaft bestimmt werden und ein Prozessparameter beim Bearbeiten des holografischen Aufzeichnungsmaterials zum Einschreiben der holografischen Anordnung in Abhängigkeit von der wenigstens einen Materialeigenschaft eingestellt werden. Der Prozessparameter kann zum Beispiel Belichtungszeit und / oder Lichtintensität beim Einschreiben der holografischen Anordnung betreffen. In Ergänzung zur Prozesssteuerung basierend auf dem Bestimmen der Beugungseffizienz ist hier vorgesehen, das holografische Aufzeichnungsmaterial vor dem Einschreiben der holografischen Anordnung oder Struktur zu bestimmen, um in Abhängigkeit hiervon einen oder mehrere Prozessparameter einzustellen, insbesondere beim Einschreiben der holografischen Anordnung. Ergänzend können weitere Prozessparameter für hierauf folgende Prozessschritte in Abhängigkeit von der oder den bestimmten Materialeigenschaften für das holografische Aufzeichnungsmaterial eingestellt oder gesteuert werden, beispielsweise die Dauer einer späteren Temperierung und / oder die Höhe einer Temperierungstemperatur. Mittels der weiteren Mess-einrichtung könne zum Beispiel optische Eigenschaften des holografischen Aufzeichnungsmaterials vor dem Einschreiben der holografischen Anordnung bestimmt werden, zum Beispiel ein Transmissions- und / oder Reflexionsvermögen.

Die aufeinanderfolgenden Prozessschritte der Prozessschrittkette können in der Vorrichtung mit den Bearbeitungsstationen in mehreren Prozesskammern ausgeführt werden. Die Prozesskammern können eine oder mehrere jeweils im Wesentlichen Lichtdichte Prozesskammern umfassen, beispielweise eine lichtdichte Prozesskammer zum Einschreiben der holografischen Anordnung oder Struktur in das holografische Aufzeichnungsmaterial.

Beim Einschreiben der holografischen Anordnung oder Struktur kann vorgesehen sein, einen holografischen Master zu verwenden. Hierbei kann vorgesehen sein, dass beim Einschreiben der holografischen Struktur mit dem Hologramm Licht durch das holografische Aufzeichnungsmaterial hindurchtritt und auf der Rückseite dann am holografischen Master gebeugt und / oder reflektiert wird, um so das Hologramm in das holografische Aufzeichnungsmaterial einzubringen.

Holografische Aufzeichnungsmaterialien sind als solche in verschiedenen Ausführungen bekannt. Es kann sich beispielsweise um einen Hologrammfilm handeln. Das holografische Aufzeichnungsmaterial kann ein- oder mehrschichtig ausgebildet sein.

Der geänderte Prozessparameter, welcher als Reaktion auf das Bestimmen der Beugungseffizienz und das Feststellen einer Abweichung geändert wird, kann zum Beispiel Belichtungszeit und / oder Lichtintensität beim Einschreiben der holografischen Anordnung betreffen, insbesondere kann die Belichtungszeit minimiert werden.

Die vorangehend erläuterten Ausgestaltungen können in Verbindung mit der Vorrichtung zum Herstellen eines Hologramms für ein Sicherheitselement entsprechend vorgesehen sein.

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheitsdokument, welches auch ein Wertdokument sein kann, verbunden, beispielsweiseverklebt, werden kann. Es kann sich aber auch um einen integralen Bestandteil eines Sicherheitsdokumentes handeln. Ein Beispiel für Erstes ist ein auf ein Sicherheitsdokument aufklebbares Visum. Ein Beispiel für Letzteres ist ein in einen Geldschein oder einen Ausweis integriertes, beispielsweise ein laminiertes Hologramm.

Ein Sicherheitsmerkmal ist eine Struktur, die nur mit (gegenüber einfachem Kopieren) erhöhtem Aufwand oder gar nicht unautorisiert herstellbar oder reproduzierbar ist.

Als Sicherheits- und / oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (zum Beispiel zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und / oder Kunststoffbasis in Frage.

Ein Code oder Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nichtindividualisierende Codes oder Muster sind Wappen, Siegel, Hoheitszeichen, etc.

Ein holografisches Aufzeichnungsmaterial ist eine Schicht aus einem Material, welches photosensitiv ist und in welcher sich Holografien durch irreversible, aber auch reversible photochemische und / oder photophysikalische Prozesse im Wege der Belichtung speichern lassen. Lediglich beispielhaft seien die in der Holografie oft verwendeten Photopolymere genannt.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische perspektivische Darstellung einer Vorrichtung zum Herstellen eines Hologramms für ein Sicherheitselement in einem holografischen Aufzeichnungsmaterial und
- Fig. 2: eine schematische Darstellung für ein Verfahren zum Herstellen eines Hologramms für ein Sicherheitselement.

Die Erfindung sieht eine kontinuierliche Kontrolle der Beugungseffizienz während der laufenden Produktion und eine automatisierte Steuerung der Prozess-, bzw. Laserparameter vor, um die Prozessstabilität zu erhöhen und den Ausschuss zu senken.

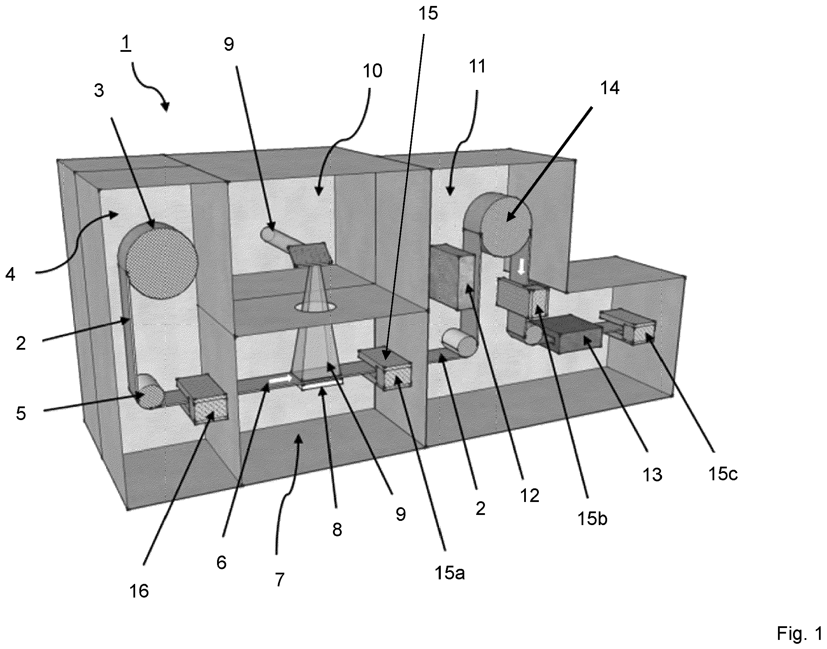

In Fig. 1 zeigt eine schematische perspektivische Darstellung einer Vorrichtung zum Herstellen eines Hologramms 1 für ein Sicherheitselement in einem holografischen Aufzeichnungsmaterial 2, welches bei dem gezeigten Beispiel als Endlosmaterial von einer Rolle 3 bereitgestellt wird.

Die Rolle 3 mit dem lichtempfindlichen holographischen Aufzeichnungsmaterial 2 ist in einer lichtdichten Kammer 4 angeordnet. Über eine Umlenkrolle 5 und ein Transportsystem 6 wird das holographische Aufzeichnungsmaterial 2 einer Prozess-Kammer 7 zugeführt. In der Prozess-Kammer 7 wird das holographische Aufzeichnungsmaterial 2, bei dem es sich um ein Filmmaterial handeln kann, oberhalb eines Masters 8 positioniert. Zum Einschreiben einer holgrafischen Anordnung oder Struktur mit einem Hologramm für ein Sicherheitselement wird das holographische Aufzeichnungsmaterial 2 mit einem Laserstrahl 9 belichtet, welcher durch das holographische Aufzeichnungsmaterial 2 hindurchtritt und am Master 8 gebeugt und / oder reflektiert wird.

Einstellung und Führung des Laserstrahls 9 erfolgt innerhalb einer Optik-Kammer 10. In einer nachfolgenden Kammer 11 werden die durch die Belichtung eingebrachten holografischen Strukturen des holographischen Aufzeichnungsmaterials 2 mittels UV-Bestrahlung mit Hilfe einer Belichtungseinrichtung 12 stabilisiert.

Nachfolgend wird das holographische Aufzeichnungsmaterial 2 mittels Wärmezufuhr mit Hilfe einer Temperierungseinrichtung 13 ausgehärtet, wobei das Endlosmaterial über weitere Umlenkrollen 14 geführt wird.

Eine Prozesskontrolle sieht vor, nach Belichtung des holographischen Aufzeichnungsmaterials 2 zum Ausbilden der holografischen Anordnung oder Struktur die Beugungseffizienz mittels einer Messvorrichtung 15 zu bestimmen, um so Qualität und Güte des eingeschriebenen Hologramms zu prüfen. Die Messvorrichtung 15 weist beim gezeigten Beispiel eine erste, eine zweite sowie ein dritte Messeinrichtung 15a, 15b, 15c auf. Als Sensoren sind in den Messeinrichtungen 15a, 15b, 15c beispielsweise Spektrometer geeignet, die unter einem geeigneten Winkel und bei geeigneter wahlweise monochromatischer Beleuchtung die Beugungseffizienz der einbelichteten holografischen Struktur messen.

Eine Messung mittels der dritten Messeinrichtung 15c erfolgt am UV-stabilisierten und ausgehärteten holographischen Aufzeichnungsmaterial 2, wodurch keine Beeinträchtigung des holographischen Aufzeichnungsmaterials 2 gegeben ist.

Eine Messung der Beugungseffizienz mittels der zweiten Messeinrichtung 15b erfolgt am UV-stabilisierten aber nicht ausgehärteten holographischen Aufzeichnungsmaterial 2, wobei eine Beeinträchtigung der eingebrachten holographischen Struktur durch geeignete Wahl der Sensorbeleuchtung (Beleuchtungswellenlänge und / oder -intensität) vermieden werden kann. Die zweite Messeinrichtung 15b arbeitet zum Beispiel mit einem gesondert einbelichteten Test- oder Prüffeld der holografischen Anordnung, welches außerhalb der belichteten Hologrammnutzfläche des Hologramms liegt, da hier die Strukturen des holographischen Aufzeichnungsmaterials 2 noch nicht thermisch ausgehärtet sind und somit eine Beeinträchtigung der Strukturen des Testfeldes wahrscheinlich sind.

Die optische Beugungseffizienz kann entlang der Prozessschrittkette in der Vorrichtung 1 mit den Bearbeitungsstationen mittels der von der Messvorrichtung 15 umfassten ersten Messeinrichtung 15a gemessen werden, nachdem die holografische Anordnung in das holografische Aufzeichnungsmaterial 2 eingeschrieben wurde. Das Bestimmen der optischen Beugungseffizienz erfolgt hierbei unmittelbar nach dem Einschreiben der holografischen Anordnung, insbesondere vor nachfolgenden Prozess- oder Bearbeitungsschritten, beispielsweise der materialbearbeitenden Belichtung und der Temperierung des holografischen Aufzeichnungsmaterials 2 mit der eingeschriebenen holografischen Anordnung oder Struktur.

Die erste Messeinrichtung 15a kann mit dem wahlweise gesondert einbelichteten Test- oder Prüffeld der holografischen Anordnung, welches außerhalb der belichteten Hologrammnutzfläche des Hologramms liegt, da hier die Strukturen des holographischen Aufzeichnungsmaterials 2 weder UV-stabilisiert noch ausgehärtet sind und somit eine Beeinträchtigung der Strukturen des Testfeldes wahrscheinlich sind.

Das Bestimmen der Beugungseffizienz wird am holografischen Aufzeichnungsmaterial 2 im Bereich der Hologrammnutzfläche, also der vom Hologramm im holographische Aufzeichnungsmaterial 2 erfassten Fläche, und / oder an dem Prüf- oder Testfeld außerhalb der Hologrammnutzfläche ausgeführt, wobei hierfür eine oder mehrere der Messeinrichtungen 15a, 15b, 15c verwendet wird. Das Prüf- oder Testfeld ist ein zusätzlich zum Hologramm selbst wahlweise eingebrachtes holografisches Element, an dem als Maß für die Qualität und Güte des Hologramms die Beugungseffizienz messbar ist. Es kann zusammen mit dem Hologramm einbelichtet werden, insbesondere zeitgleich.

Das Prüfelement kann zumindest teilweise im Bereich der von dem Hologramm für das Sicherheitselement erfassten Hologrammnutzfläche hergestellt werden, also zum Beispiel von einem Abschnitt oder Element des Hologramms selbst gebildet werden. Das Prüfelement kann ganz oder teilweise im Bereich der Hologrammnutzfläche liegen, über die sich das Hologramm für das Sicherheitselement in dem holografischen Aufzeichnungsmaterial 2 flächig erstreckt. Auf diese Weise kann das Prüfelement in einen Teilabschnitt des Hologramms integriert sein, zweckmäßig ohne die holografische Struktur des Hologramms zu beeinträchtigen. Hierbei kann das Prüfelement von einem Element oder Abschnitt des Hologramms gebildet werden, welches für mehrere Hologramme unverändert bleibt, beispielsweise ein Hologrammelement, welches nicht personenspezifisch ist, im Unterschied zu Hologrammelementen, die personenspezifisch ausgebildet werden (personalisiertes Sicherheitselement).

Mittels der einer weiteren Messeinrichtung 16 wird eine Messung der Eigenschaften des holographischen Aufzeichnungsmaterials 2 vor der Belichtung ermöglicht. Die Messung von Eigenschaften des holographischen Aufzeichnungsmaterials 2 an dieser Stelle ermöglicht in vorteilhafter Weise die Einstellung der Prozess- oder Laserparameter vor dem Belichten und optimiert die Prozessqualität und / oder minimiert die Prozesszeit weiter. An dieser Position ist das holographische Aufzeichnungsmaterial 2 weder UV-stabilisiert noch ausgehärtet. Somit sollte die Messung der Eigenschaften des holographischen Aufzeichnungsmaterials 2 außerhalb der dann belichteten Hologrammnutzfläche liegen und / oder vorzugsweise im NIR-Wellenlängenbereich durchgeführt werden.

Es wurde gefunden, dass eine stabile und hohe Beugungseffizienz des Hologramms von unterschiedlichen Faktoren abhängt. Zu diesen Faktoren gehören die Prozesstemperatur während der Belichtung und Materialeigenschaft des zu belichtenden Aufzeichnungsmaterials, welche von Charge zu Charge stark schwanken können. Um eine Verbesserung der Prozessstabilität mit einem geringeren Ausschuss zu gewährleisten, kann Folgendes vorgesehen sein: Bei der Belichtung des holographischen Aufzeichnungsmaterials 2 mit dem Laser wird ein Prüf- oder Testfeld mit belichtet, sofern im Layout der Hologrammnutzfläche kein geeignetes Feld vorhanden ist. Während des weiteren Bearbeitungsprozesses wird an mindestens einer Stelle die Beugungseffizienz während der Produktion kontinuierlich, d.h. an jedem Werkstück (Fertigungsteil) gemessen. Anhand der erhaltenen Messwerte werden ein oder mehrere Prozessparameter automatisch optimiert und während der laufenden Produktion angepasst. Hierdurch werden eine bessere Anpassung der Produktionsparameter erreicht und der Ausschuss erheblich reduziert. Eine solche Anpassung von Prozessparameter(n) erfolgt, wenn die gemessene Beugungseffizienz von einem vorgegebenen Wert / Bereich abweicht. Zum Beispiel können dann Belichtungszeit und / oder -intensität für die Belichtung des holographischen Aufzeichnungsmaterials 2 beim Einschreiben der holografischen Anordnung geändert werden.

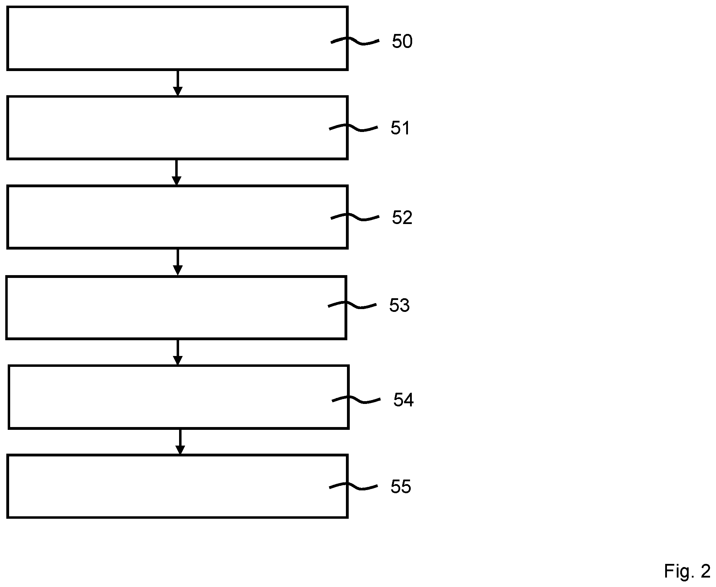

Fig. 2 zeigt eine schematische Darstellung für ein Verfahren zum Herstellen eines Hologramms für ein Sicherheitselement in dem holografischen Aufzeichnungsmaterial 2 unter Verwendung der Vorrichtung aus Fig. 1. Im Schritt 50 wird das holografische Aufzeichnungsmaterial 2 bereitgestellt, beispielsweise als Endlosmaterial von der Rolle, um es dann im Schritt 52 zum Einschreiben der holografischen Anordnung oder Struktur zu belichten. Hierbei wird der Master 8 verwendet. Nach dem Einschreiben der holografischen Struktur in das holografische Aufzeichnungsmaterial 2 wird dieses weiteren Prozessschritten in der Vorrichtung 1 unterzogen. Hierbei wird mittels einer oder mehrerer der Messeinrichtungen 15a, 15b, 15c, gemäß der beanspruchten Erfindung jedoch zumindest mittels der Messeinrichtung 15b, die optische Beugungseffizienz für die eingeschriebene holografische Anordnung bestimmt (Schritt 53), um dann im Schritt 54 zu prüfen, ob die gemessene optische Beugungseffizienz einer vorgegebenen optischen Beugungseffizienz entspricht oder hiervon abweicht. Die Prüfung kann mittels Datenverarbeitung in einer geeigneten Auswerteinrichtung ausgeführt werden, welche zumindest mit der Messvorrichtung 15 verbunden ist. In Abhängigkeit den dem Ergebnis der Prüfung können Steuersignale für das Erzeugen und Anwenden des Laserstrahls 9 erzeugt werden.

Wenn die gemessene optische Beugungseffizienz abweicht, wird im Schritt 55 zumindest ein Prozessparameter angepasst, gemäß welchem das holografische Aufzeichnungsmaterial 2 in der Vorrichtung 1 bearbeitet wird. Die Prozessparameteranpassung kann dann für die weitere Prozessierung der holografischen Anordnung, für die die Beugungseffizienz bestimmt wurde, angewendet werden.

Ergänzend erfolgt die Prozessparameteranpassung für das Herstellen nachfolgender Hologramme in dem holografischen Aufzeichnungsmaterial 2 anhand der gemessenen Eigenschaften des holographischen Aufzeichnungsmaterials 2 vor der Belichtung, welches die Messeinrichtung 16 ermöglicht.

### Bezugszeichenliste

- 1: Vorrichtung
- 2: holographischen Aufzeichnungsmaterial
- 3: Rolle
- 4: lichtdichte Kammer
- 5: Umlenkrolle
- 6: Transportsystem
- 7: Prozess-Kammer
- 8: Master
- 9: Laserstrahl
- 10: Optik-Kammer
- 11: nachfolgende Kammer
- 12: Belichtungseinrichtung
- 13: Temperierungseinrichtung
- 14: weitere Umlenkrollen
- 15: Messvorrichtung
- 15a: erste Messeinrichtung
- 15b: zweite Messeinrichtung
- 15c: dritte Messeinrichtung
- 16: weitere Messeinrichtung
- 50, ..., 55: Verfahrensschritte

## Patentansprüche

1. Verfahren zum Herstellen eines Hologramms für ein Sicherheitselement, mit:
- Bereitstellen eines holografischen Aufzeichnungsmaterials (2) in einer Vorrichtung (1) mit Bearbeitungsstationen, die eingerichtet sind, aufeinanderfolgende Prozessschritte einer Prozessschrittkette beim Herstellen eines Hologramms für ein Sicherheitselement auszuführen und hierbei das holografische Aufzeichnungsmaterial (2) Prozessparametern entsprechend zu prozessieren;
- Bearbeiten des holografischen Aufzeichnungsmaterials (2) in einem Prozessschritt, der eingerichtet ist, das holografische Aufzeichnungsmaterial (2) zu belichten, wobei
- hierbei das holografische Aufzeichnungsmaterial (2) dem Prozessschritt zugeordneten Prozessparametern entsprechend bearbeitet wird und
- das Bearbeiten ein Einschreiben einer holografischen Anordnung mit dem Hologramm für das Sicherheitselement mittels Belichten des holografischen Aufzeichnungsmaterials (2) in das holografische Aufzeichnungsmaterial (2) umfasst, wobei das Hologramm in dem holografischen Aufzeichnungsmaterial (2) eine Hologrammnutzfläche erfassend gebildet wird, wobei die holografische Anordnung beim Belichten des holografischen Aufzeichnungsmaterials (2) mit einem Prüfelement hergestellt wird;
- Bestimmen einer optischen Beugungseffizienz der holografischen Anordnung mittels einer Messeinrichtung (15) in einem weiteren Prozessschritt, welcher in der Prozessschrittkette in der Vorrichtung (1) mit den Bearbeitungsstationen dem Prozessschritt nachgelagert ist, wobei die optische Beugungseffizienz für das Prüfelement bestimmt wird;
- Ändern wenigstens eines Prozessparameters, wenn die gemessene optische Beugungseffizienz von einer vorgegebenen optischen Beugungseffizienz verschieden ist, wobei der Prozessparameter ein Laserparameter für den Betrieb eines Lasers zum Einschreiben der holografischen Anordnung und / oder eine Höhe einer Temperierungstemperatur und/oder eine Dauer einer Temperierung des holografischen Aufzeichnungsmaterials (2) und der darin eingeschriebenen holografischen Anordnung umfasst; und
- Anwenden des wenigstens einen geänderten Prozessparameters beim weiteren Prozessieren der holografischen Anordnung in einem anderen Prozessschritt, welcher in der Prozessschrittkette in der Vorrichtung (1) mit den Bearbeitungsstationen dem weiteren Prozessschritt nachgelagert ist, und / oder beim Herstellen eines weiteren Hologramms für ein Sicherheitselement in der Vorrichtung (1) mit den Bearbeitungsstationen, **dadurch gekennzeichnet dass** die optische Beugungseffizienz entlang der Prozessschrittkette in der Vorrichtung mit den Bearbeitungsstationen mittels einer von der Messvorrichtung (15) umfassten zweiten Messeinrichtung (15b) gemessen wird, nachdem das holografische Aufzeichnungsmaterial (2) zumindest im Bereich der von dem Hologramm für das Sicherheitselement erfassten Hologrammnutzfläche mittels weiterer Lichtanwendung stabilisiert wurde.

2. Verfahren nach Anspruch 1, **dadurch gekennzeichnet, dass** die optische Beugungseffizienz im Bereich der von dem Hologramm für das Sicherheitselement erfassten Hologrammnutzfläche bestimmt wird.

3. Verfahren nach Anspruch 1 oder 2, **dadurch gekennzeichnet, dass** die optische Beugungseffizienz außerhalb des Bereichs der von dem Hologramm für das Sicherheitselement erfassten Hologrammnutzfläche bestimmt wird.

4. Verfahren nach einem der vorangehenden Ansprüche, **dadurch gekennzeichnet, dass** das Prüfelement zumindest teilweise im Bereich der von dem Hologramm für das Sicherheitselement erfassten Hologrammnutzfläche hergestellt wird.

5. Verfahren nach einem der vorangehenden Ansprüche, **dadurch gekennzeichnet, dass** das Prüfelement zumindest teilweise außerhalb des Bereichs der von dem Hologramm für das Sicherheitselement erfassten Hologrammnutzfläche hergestellt wird.

6. Verfahren nach einem der vorangehenden Ansprüche, **dadurch gekennzeichnet, dass** die optische Beugungseffizienz entlang der Prozessschrittkette in der Vorrichtung (1) mit den Bearbeitungsstationen zusätzlich mittels einer von der Messvorrichtung (15) umfassten ersten Messeinrichtung (15a) gemessen wird, nachdem die holografische Anordnung in das holografische Aufzeichnungsmaterial (2) eingeschrieben wurde.

7. Verfahren nach einem der vorangehenden Ansprüche, **dadurch gekennzeichnet, dass** die optische Beugungseffizienz entlang der Prozessschrittkette in der Vorrichtung mit den Bearbeitungsstationen zusätzlich mittels einer von der Messvorrichtung (15) umfassten dritten Messeinrichtung (15c) gemessen wird, nachdem das holografische Aufzeichnungsmaterial (2) zumindest im Bereich der von dem Hologramm für das Sicherheitselement erfassten Hologrammnutzfläche ausgehärtet wurde.

8. Verfahren nach einem der vorangehenden Ansprüche, soweit auf Anspruch 5 rückbezogen, **dadurch gekennzeichnet, dass** die optische Beugungseffizienz in einem von dem Prüfelement erfassten Bereich des holografischen Aufzeichnungsmaterials (2) außerhalb der Hologrammnutzfläche gemessen wird, wobei der vom Prüfelement erfasste Bereich frei vom Bearbeiten mittels der weiteren Lichtanwendung zum Stabilisieren und / oder zum Aushärten ist.

9. Verfahren nach einem der vorangehenden Ansprüche, **dadurch gekennzeichnet, dass** vor dem Bearbeiten des holografischen Aufzeichnungsmaterials (2) zum Einschreiben der holografischen Anordnung das holografische Aufzeichnungsmaterial (2) mittels einer weiteren Messeinrichtung (16) hinsichtlich wenigstens einer Materialeigenschaft bestimmt wird und ein Prozessparameter beim Bearbeiten des holografischen Aufzeichnungsmaterials (2) zum Einschreiben der holografischen Anordnung in Abhängigkeit von der wenigstens einen Materialeigenschaft eingestellt wird.

10. Verfahren nach einem der vorangehenden Ansprüche, **dadurch gekennzeichnet, dass** die aufeinanderfolgenden Prozessschritte der Prozessschrittkette in der Vorrichtung (1) mit den Bearbeitungsstationen in mehreren Prozesskammern ausgeführt werden.

11. Verfahren zum Herstellen eines Wert- oder Sicherheitsdokuments, wobei ein Dokumentenkörper mit einem ein Hologramm aufweisenden Sicherheitselement gebildet wird, welches nach einem Verfahren gemäß mindestens einem der vorangehenden Ansprüche hergestellt ist.

12. Vorrichtung (1) zum Herstellen eines Hologramms für ein Sicherheitselement, mit:
- Bearbeitungsstationen, die eingerichtet sind, aufeinanderfolgende Prozessschritte einer Prozessschrittkette beim Herstellen eines Hologramms für ein Sicherheitselement auszuführen und hierbei das holografische Aufzeichnungsmaterial (2) Prozessparametern entsprechend zu prozessieren; und
- einer Messeinrichtung (15), die eingerichtet ist, eine optische Beugungseffizienz einer holografischen Struktur zu bestimmen;
wobei die Vorrichtung eingerichtet ist,
- ein holografisches Aufzeichnungsmaterial (2) bereitzustellen;
- das holografische Aufzeichnungsmaterial (2) in einem Prozessschritt zu bearbeiten, derart, dass das holografische Aufzeichnungsmaterial (2) belichtet wird, wobei
- hierbei das holografische Aufzeichnungsmaterial (2) dem Prozessschritt zugeordneten Prozessparametern entsprechend bearbeitet wird und
- das Bearbeiten ein Einschreiben einer holografischen Anordnung mit dem Hologramm für das Sicherheitselement mittels Belichten des holografischen Aufzeichnungsmaterials (2) in das holografische Aufzeichnungsmaterial (2) umfasst, wobei das Hologramm in dem holografischen Aufzeichnungsmaterial (2) eine Hologrammnutzfläche erfassend gebildet wird, wobei die Vorrichtung dazu eingerichtet ist, die holografische Anordnung beim Belichten des holografischen Aufzeichnungsmaterials (2) mit einem Prüfelement herzustellen;
- mittels der Messeinrichtung (15) die optische Beugungseffizienz für die holografische Anordnung in einem weiteren Prozessschritt zu bestimmen, welcher in der Prozessschrittkette in der Vorrichtung mit den Bearbeitungsstationen dem Prozessschritt nachgelagert ist, und die optische Beugungseffizienz für das Prüfelement zu bestimmen;
- wenigstens einen Prozessparameter zu ändern, wenn die gemessene optische Beugungseffizienz von einer vorgegebene optischen Beugungseffizienz verschieden ist, wobei der Prozessparameter ein Laserparameter für den Betrieb eines Lasers zum Einschreiben der holografischen Anordnung und / oder eine Höhe einer Temperierungstemperatur und/oder eine Dauer einer Temperierung des holografischen Aufzeichnungsmaterials (2) und der darin eingeschriebenen holografischen Anordnung umfasst; und
- den wenigstens einen geänderten Prozessparameter beim weiteren Prozessieren der holografischen Anordnung in einem anderen Prozessschritt, welcher in der Prozessschrittkette in der Vorrichtung (1) mit den Bearbeitungsstationen dem weiteren Prozessschritt nachgelagert ist, und / oder beim Herstellen eines weiteren Hologramms für ein Sicherheitselement mittels der Bearbeitungsstationen anzuwenden, **dadurch gekennzeichnet dass** die Vorrichtung weiter dazu eingerichtet ist, die optische Beugungseffizienz entlang der Prozessschrittkette in der Vorrichtung mit den Bearbeitungsstationen mittels einer von der Messvorrichtung (15) umfassten zweiten Messeinrichtung (15b) zu messen, nachdem das holografische Aufzeichnungsmaterial (2) zumindest im Bereich der von dem Hologramm für das Sicherheitselement erfassten Hologrammnutzfläche mittels weiterer Lichtanwendung stabilisiert wurde.

## Claims

1. A method for producing a hologram for a security element, comprising:
- providing a holographic recording material (2) in an apparatus (1) having processing stations that are configured to carry out successive process steps of a process step chain during the production of a hologram for a security element and thereby process the holographic recording material (2) according to process parameters;
- processing the holographic recording material (2) in a process step that is configured to expose the holographic recording material (2), wherein
- the holographic recording material (2) is thereby processed in accordance with process parameters assigned to the process step and
- the processing comprises writing a holographic arrangement including the hologram for the security element into the holographic recording material (2) by means of exposing the holographic recording material (2), wherein the hologram is formed in the holographic recording material (2) to cover a hologram functional area, wherein the holographic arrangement is produced with a test element during exposure of the recording material (2);
- determining an optical diffraction efficiency of the holographic arrangement by means of a measuring apparatus (15) in a further process step, which in the process step chain in the apparatus (1) with the processing stations lies after the process step, wherein the optical diffraction efficiency is determined for the test element;
- modifying at least one process parameter if the measured optical diffraction efficiency deviates from a predetermined optical diffraction efficiency, wherein the process parameter comprises a laser parameter for operating a laser for writing the holographic arrangement and/or a tempering temperature level and/or duration of a tempering process for the holographic recording material (2) and the holographic arrangement written therein; and
- applying the at least one modified process parameter during further processing of the holographic arrangement in another process step, which in the process step chain in the apparatus (1) with the processing stations lies after the further process step, and/or during production of a further hologram for a security element in the apparatus (1) with the processing stations,
**characterized in that** the optical diffraction efficiency is measured along the process step chain in the apparatus with the processing stations by means of a second measuring device (15b) included in the measuring apparatus (15), after the holographic recording material (2) has been stabilized by means of further light application at least in the region of the hologram functional area covered by the hologram for the security element.

2. The method according to claim 1, **characterized in that** the optical diffraction efficiency is determined in the region of the hologram functional area covered by the hologram for the security element.

3. The method according to claim 1 or 2, **characterized in that** the optical diffraction efficiency is determined outside the region of the hologram functional area covered by the hologram for the security element.

4. The method according to any one of the preceding claims, **characterized in that** the test element is produced at least partially in the region of the hologram functional area covered by the hologram for the security element.

5. The method according to any one of the preceding claims, **characterized in that** the test element is produced at least partially outside the region of the hologram functional area covered by the hologram for the security element.

6. The method according to any one of the preceding claims, **characterized in that** the optical diffraction efficiency is additionally measured along the process step chain in the apparatus (1) with the processing stations by means of a first measuring device (15a) included in the measuring apparatus (15), after the holographic arrangement has been written into the holographic recording material (2).

7. The method according to any one of the preceding claims, **characterized in that** the optical diffraction efficiency is additionally measured along the process step chain in the apparatus with the processing stations by means of a third measuring device (15c) included in the measuring apparatus (15), after the holographic recording material (2) has been cured at least in the region of the hologram functional area covered by the hologram for the security element.

8. The method according to any one of the preceding claims, insofar as it refers back to claim 5, **characterized in that** the optical diffraction efficiency is measured in a region of the holographic recording material (2) covered by the test element outside the hologram functional area, wherein the region covered by the test element is free from processing by means of the further light application for stabilizing and/or curing.

9. The method according to any one of the preceding claims, **characterized in that** before processing the holographic recording material (2) to write the holographic arrangement, the holographic recording material (2) is evaluated by means of a further measuring device (16) with respect to at least one material property and a process parameter during processing the holographic recording material (2) to write the holographic arrangement is set depending on the at least one material property.

10. The method according to any one of the preceding claims, **characterized in that** the successive process steps of the process step chain in the apparatus (1) with the processing stations are performed in multiple process chambers.

11. Method for producing a value or security document, wherein a document body is formed with a security element comprising a hologram, said security element being produced using a method according to at least one of the preceding claims.

12. Apparatus (1) for producing a hologram for a security element, comprising:
- processing stations that are configured to carry out successive process steps of a process step chain during the production of a hologram for a security element and thereby process the holographic recording material (2) according to process parameters; and
- a measuring apparatus (15) that is configured to determine an optical diffraction efficiency of a holographic structure;
wherein the apparatus is configured
- to provide a holographic recording material (2);
- to process the holographic recording material (2) in a process step, in such a manner that the holographic recording material (2) is exposed, wherein
- the holographic recording material (2) is thereby processed according to process parameters assigned to the process step and
- the processing comprises writing a holographic arrangement including the hologram for the security element into the holographic recording material (2) by means of exposing the holographic recording material (2), wherein the hologram is formed in the holographic recording material (2) to cover a hologram functional area, wherein the apparatus is configured to produce the holographic arrangement with a test element during exposure of the holographic recording material (2);
- to determine the optical diffraction efficiency of the holographic arrangement by means of the measuring apparatus (15) in a further process step, which in the process step chain in the apparatus with the process stations lies after the process step, and to determine the optical diffraction efficiency for the test element;
- to modify at least one process parameter if the measured optical diffraction efficiency deviates from a predefined optical diffraction efficiency, wherein the process parameter comprises a laser parameter for operating a laser for writing the holographic arrangement and/or a tempering temperature level and/or duration of a tempering process for the holographic recording material (2) and the holographic arrangement written therein; and
- to apply the at least one modified process parameter during further processing of the holographic arrangement in another process step, which in the process step chain in the apparatus (1) with the processing stations lies after the further process step, and/or during production of a further hologram for a security element by means of the processing stations,
**characterized in that** the apparatus is further configured to measure the optical diffraction efficiency along the process step chain in the apparatus with the processing stations by means of a second measuring device (15b) included in the measuring apparatus (15), after the holographic recording material (2) has been stabilized by means of further light application at least in the region of the hologram functional area covered by the hologram for the security element.

## Revendications

1. Procédé de production d'un hologramme pour un élément de sécurité, comprenant :
- la fourniture d'un matériau d'enregistrement holographique (2) dans un dispositif (1) équipé de postes de traitement, qui sont configurées pour exécuter les étapes de traitement successives d'une chaîne d'étapes de procédé pour la production d'un hologramme d'un élément de sécurité et, ce faisant, pour traiter le matériau d'enregistrement holographique (2) selon des paramètres de traitement ;
- le traitement du matériau d'enregistrement holographique (2) lors d'une étape de traitement, qui est conçue pour exposer le matériau d'enregistrement holographique (2),
- ce faisant, le matériau d'enregistrement holographique (2) est traité selon des paramètres de traitement attribués à l'étape de traitement, et
- le traitement comprend l'inscription d'un agencement holographique avec l'hologramme de l'élément de sécurité dans le matériau d'enregistrement holographique (2) par exposition du matériau d'enregistrement holographique (2), dans lequel l'hologramme est formé dans le matériau d'enregistrement holographique (2) englobant une zone d'hologramme utile, dans lequel l'agencement holographique est produit lors de l'exposition du matériau d'enregistrement holographique (2) à un élément de test ;
- la détermination d'une efficacité de diffraction optique de l'agencement holographique au moyen d'un dispositif de mesure (15) lors d'une étape de traitement ultérieure, qui est située en aval de l'étape dans la chaîne d'étapes de procédé, dans le dispositif (1) équipé de postes de traitement, dans lequel l'efficacité de diffraction optique de l'élément de test est déterminée ;
- la modification d'au moins un paramètre de traitement, si l'efficacité de diffraction optique mesurée diffère d'une efficacité de diffraction optique prédéterminée, dans lequel le paramètre de traitement comprend un paramètre laser faisant fonctionner un laser pour l'inscription de l'agencement holographique et/ou une valeur d'une température de thermorégulation et/ou une durée de thermorégulation du matériau d'enregistrement holographique (2) et de l'agencement holographique inscrit dans celui-ci ; et
- l'application d'au moins un paramètre de traitement modifié lors du traitement ultérieur de l'agencement holographique lors d'une autre étape de processus, qui est située en aval de l'étape suivante dans la chaîne d'étapes de procédé du dispositif (1) équipé de postes de traitement, et/ou lors de la production d'un autre hologramme pour un élément de sécurité dans le dispositif (1) équipé de postes de traitement,
**caractérisé en ce que** l'efficacité de diffraction optique le long de la chaîne d'étapes de procédé avec les postes de traitement est mesurée au moyen d'un deuxième dispositif de mesure (15b) intégré au dispositif de mesure (15), après la stabilisation du matériau d'enregistrement holographique (2) par une nouvelle application de lumière, au moins dans la zone de la zone utile d'hologramme détectée par l'hologramme de l'élément de sécurité.

2. Procédé selon la revendication 1, **caractérisé en ce que** l'efficacité de diffraction optique est déterminée dans la zone de la zone utile de l'hologramme détectée par l'hologramme de l'élément de sécurité.

3. Procédé selon la revendication 1 ou 2, **caractérisé en ce que** l'efficacité de diffraction optique est déterminée en dehors de la zone de la zone utile d'hologramme détectée par l'hologramme de l'élément de sécurité.

4. Procédé selon une des revendications précédentes, **caractérisé en ce que** l'élément de test est produit au moins partiellement dans la zone de la zone utile d'hologramme détectée par l'hologramme de l'élément de sécurité.

5. Procédé selon une des revendications précédentes, **caractérisé en ce que** l'élément de test est produit au moins partiellement en dehors de la zone de la zone utile d'hologramme détectée par l'hologramme de l'élément de sécurité.

6. Procédé selon une des revendications précédentes, **caractérisé en ce que** l'efficacité de diffraction optique le long de la chaîne d'étapes de procédé dans le dispositif (1) équipé de postes de traitement est en outre mesurée au moyen d'un premier dispositif de mesure (15a) intégré au dispositif de mesure (15), après l'inscription du dispositif holographique sur le support d'enregistrement holographique (2).

7. Procédé selon une des revendications précédentes, **caractérisé en ce que** l'efficacité de diffraction optique le long de la chaîne d'étapes de procédé dans le dispositif équipé de postes de traitement est mesurée en outre au moyen d'un troisième dispositif de mesure (15c) intégré au dispositif de mesure (15), après le durcissement du matériau d'enregistrement holographique (2) au moins dans la zone de la surface utile d'hologramme détectée par l'hologramme de l'élément de sécurité.

8. Procédé selon une des revendications précédentes, dans la mesure où elle dépend de la revendication 5, **caractérisé en ce que** l'efficacité de diffraction optique est mesurée dans une zone du matériau d'enregistrement holographique (2) détectée par l'élément de test, en dehors de la zone utile d'hologramme, dans lequel la zone détectée par l'élément de test est exempte de traitement par application de lumière supplémentaire pour la stabilisation et/ou le durcissement.

9. Procédé selon une des revendications précédentes, **caractérisé en ce qu'**avant le traitement du matériau d'enregistrement holographique (2) pour l'inscription de l'agencement holographique, au moins une propriété du matériau est déterminée au moyen d'un autre dispositif de mesure (16) et un paramètre de traitement lors du traitement du matériau d'enregistrement holographique (2) pour l'inscription de l'agencement holographique est ajusté en fonction d'au moins une propriété de matériau.

10. Procédé selon une des revendications précédentes, **caractérisé en ce que** les étapes successives de la chaîne d'étapes de procédé sont réalisées dans le dispositif (1) dont les postes de traitement sont réparties dans plusieurs chambres de traitement.

11. Procédé de production d'un document de valeur ou de sécurité, dans lequel un corps de document est formé avec un élément de sécurité comportant un hologramme, qui est produit selon un procédé selon au moins une des revendications précédentes.

12. Dispositif (1) de production d'un hologramme pour un élément de sécurité, comprenant :
- des postes de traitement configurés pour réaliser les étapes successives d'une chaine d'étapes de procédé lors de la production d'un hologramme pour un élément de sécurité et, ce faisant, pour traiter le matériau d'enregistrement holographique (2) selon des paramètres de traitement ; et
- un dispositif de mesure (15) configuré pour déterminer l'efficacité de diffraction optique d'une structure holographique ;
dans lequel le dispositif est configuré pour
- fournir un matériau d'enregistrement holographique (2) ;
- traiter le matériau d'enregistrement holographique (2) lors d'une étape de traitement telle que le matériau d'enregistrement holographique soit exposé,
- ce faisant, le matériau d'enregistrement holographique (2) est traité selon les paramètres de traitement attribués à l'étape de traitement, et
- le traitement comprend l'inscription d'un agencement holographique avec l'hologramme de l'élément de sécurité dans le matériau d'enregistrement holographique (2) par exposition du matériau d'enregistrement holographique (2), dans lequel l'hologramme est formé dans le matériau d'enregistrement holographique (2) englobant une zone utile d'hologramme, dans lequel le dispositif est configuré pour produire l'agencement holographique lors de l'exposition du matériau d'enregistrement holographique (2) à un élément de test ;
- au moyen du dispositif de mesure (15), la détermination de l'efficacité de diffraction optique de l'agencement holographique lors d'une étape de traitement ultérieure, située en aval de l'étape de traitement dans le dispositif comportant les postes de traitement, et la détermination de l'efficacité de diffraction optique de l'élément de test ;
- la modification d'au moins un paramètre de traitement si l'efficacité de diffraction optique mesurée diffère d'une efficacité de diffraction optique prédéterminée, dans lequel le paramètre de traitement comprend un paramètre laser faisant fonctionner un laser pour l'inscription de l'agencement holographique et/ou une valeur d'une température de thermorégulation et/ou une durée de thermorégulation du matériau d'enregistrement holographique (2) et de l'agencement holographique inscrit dans celui-ci ; et
- l'application d'au moins un paramètre de traitement modifié lors du traitement ultérieur de l'agencement holographique lors d'une autre étape de processus, qui est située en aval de l'étape suivante dans la chaîne d'étapes de procédé du dispositif (1) équipé de postes de traitement, et/ou lors de la production d'un autre hologramme pour un élément de sécurité dans le dispositif équipé de postes de traitement,
**caractérisé en ce que** le dispositif est en outre configuré pour mesurer l'efficacité de diffraction optique le long de la chaîne d'étapes de procédé avec les postes de traitement au moyen d'un deuxième dispositif de mesure (15b) intégré au dispositif de mesure (15), après la stabilisation du matériau d'enregistrement holographique (2) par une nouvelle application de lumière, au moins dans la zone de la zone utile d'hologramme détectée par l'hologramme de l'élément de sécurité.
